# EUROPEAN PATENT APPLICATION

(11) **EP 4 477 732 A1**
(43) Date of publication of application: **18.12.2024**
(21) Application number: 24181427.6
(22) Date of filing: 11.06.2024
(51) Int. Cl.: C10J 3/00, C10K 1/00, C10K 3/04

(54) **SYSTEM AND METHOD FOR PRODUCTION OF HYDROGEN GAS AND LIQUID CARBON DIOXIDE FROM HAZARDOUS AND/OR TOXIC SUBSTANCES**

(30) Priority: 15.06.2023 SE 2350731
(71) Applicant: Plagazi AB, 269 21 Båstad (SE)
(72) Inventor: KÄLLANDER, Stefan, 181 55 Lidingö (SE); GRANBERG, Torsten, 269 34 Båstad (SE)
(74) Representative: Zacco Sweden AB

(57) **Abstract**

The disclosure relates to a system (100) for production of hydrogen gas and liquid carbon dioxide from hazardous and/or toxic substances. The system comprises a feedstock cooling unit (22), a crushing unit (25), and a gasification unit (2). The liquid carbon dioxide comprises carbon from the first feedstock being gasified in the gasification unit. The disclosure also relates to a method (200) for production of hydrogen gas and liquid carbon dioxide from hazardous and/or toxic substances.

## Description

### TECHNICAL FIELD

The present application relates to a system for production of hydrogen gas and liquid carbon dioxide from hazardous and/or toxic substances and to a method for production of hydrogen gas and liquid carbon dioxide from hazardous and/or toxic substances.

### BACKGROUND ART

Handling and destruction of hazardous and toxic waste from hospitals, laboratories, slaughterhouses, industries and pharmacies cause large environmental challenges, are risky and costly to handle. Hazardous waste often ends up as landfill or are transported and handled at custom-made incineration plants. Some hospital waste, such as contagious and/or biological waste, has to be treated in special autoclaves before being sent to incineration.

There is thus need for an improved handling and destruction of hazardous and toxic waste.

### SUMMARY OF THE INVENTION

An object of the present disclosure is to provide a system and method for production of hydrogen gas and liquid carbon dioxide from hazardous and toxic substances where the problems with prior art technologies are mitigated or at least alleviated.

According to a first aspect there is provided a system for production of hydrogen gas and liquid carbon dioxide from hazardous and toxic substances. The system comprises a feedstock cooling unit being arranged for cooling a first feedstock by means of liquid carbon dioxide being fed directly into the process flow, thereby forming a frozen feedstock. The system further comprises a crushing unit being connected to the feedstock cooling unit and being arranged for crushing the frozen feedstock. The system further comprises a gasification unit being connected to the feedstock cooling unit and being arranged for gasification of the frozen feedstock in presence of oxygen into gaseous elements comprising carbon monoxide and hydrogen. The liquid carbon dioxide comprises carbon from the first feedstock being gasified in the gasification unit.

The system provides for recycling of hazardous and/or toxic substances instead of that the substances end up as landfill or being incinerated at incineration plants resulting in problems related to incineration such as air pollution and toxic fly ash.

The system provides for production of hydrogen gas and liquid carbon dioxide from hazardous and/or toxic substances without the need for sorting and/or separation of the first feedstock prior to providing the first feedstock into the system. Thus, the system provides for a time and cost efficient production of hydrogen gas and liquid carbon dioxide from hazardous and/or toxic substances. Inorganic materials, such as Si and Cu, and other metallic compounds from the feedstock, will be turned into chemically inert slag.

By using liquid carbon dioxide formed by the system itself as cooling medium for cooling the feedstock in the feedstock cooling unit, the system is self-sufficient of cooling medium, i.e. carbon dioxide. Carbon dioxide has no negative impact on the process and can thus be fed directly into the process. The carbon dioxide formed by the system itself is recycled which is both cost efficient and energy saving since no other cooling medium has to be transported to the system. Since the carbon dioxide is fed directly into the process flow a recirculation of carbon dioxide is achieved without emission of carbon dioxide to the environment.

By cooling the toxic and/or hazardous substances, the first feedstock becomes easier to handle since it is avoided that the first feedstock, which may be sticky, may damage the mixing unit and/or the crushing unit of the system. In addition, a frozen feedstock can be crushed into smaller and/or uniform parts.

By the crushing unit, the feedstock is crushed into smaller and/or uniform parts which is a prerequisite for a complete and smooth gasification of the waste.

All products from the method, such as hydrogen, carbon dioxide and water soluble substances, are taken care of and there are no emission of toxic and/or hazardous substances to the environment.

According to a further development, the system further comprises a gas cooling unit being connected to the gasification unit and being arranged for cooling the gaseous elements being formed in the gasification unit. The system further comprises a filtering unit and/or a cleaning unit being connected to the gas cooling unit and being arranged for cleaning the gaseous elements into carbon monoxide and hydrogen. The system further comprises a water-gas-shift unit being connected to the cleaning unit and being arranged for allowing the carbon monoxide of the gaseous elements to react with water according to the following formula: CO + H₂O => H₂ + CO₂. The system further comprises a hydrogen separation unit being connected to the water-gas-shift unit and being arranged for separation of H₂ and CO₂ into a first stream of hydrogen gas and a second stream of carbon dioxide gas. The system further comprises a first sealed container being arranged for collection of the first stream of hydrogen gas and a second sealed container being arranged for collection of the second stream of carbon dioxide gas, preferably the second stream of carbon dioxide gas is compressed by a compressor and collected in liquid form.

The system provides for production of a high yield of hydrogen gas (H₂) having a high purity, which may be used for example industrial processes where hydrogen gas is needed, such as for reduction of iron ore. The system also provides for collection of all of the carbon dioxide (CO₂) formed in the system thereby eliminating or at least greatly preventing CO₂ emission to the atmosphere.

According to a further development, the system further comprises an unpacking unit being arranged for unpacking the first feedstock prior to the first feedstock being cooled by the feedstock cooling unit, and being connected to the feedstock cooling unit, and/or a mixing unit being connected to the feedstock cooling unit and being arranged for mixing the frozen feedstock with a second feedstock prior to gasification of the frozen feedstock in the gasification unit.

The hazardous and/or toxic substances are typically delivered to the system in sacks or sealed containers due to strict requirements with regards to transport of hazardous and/or toxic waste. The system thus provides for a safe handling of toxic and/or hazardous substances since the unpacking of the sacks or sealed containers is performed within the unpacking unit and the risk that an operator of the system is exposed to the hazardous and/or toxic substances, i.e. the first feedstock, is eliminated or at least greatly reduced. The system is a closed system and since the carbon dioxide formed within the system is recirculated there is no emission of carbon dioxide to the environment.

The mixing unit provides a mixture of the first and second feedstock which provides for an improved gasification as compared to a first and second feedstock not being mixed.

According to a further development, a system further comprises a connection for cooling means being connected to the feedstock cooling unit and being arranged to provide the liquid carbon dioxide to the feedstock cooling unit. The liquid carbon dioxide is formed by the system itself, and the carbon dioxide is fed directly into the process flow and thus a recirculation of carbon dioxide is achieved.

Thus, the carbon dioxide formed by the system is recycled thereby eliminating or at least greatly preventing CO₂ emission to the atmosphere.

According to a further development, the system further comprises a connection for CO₂ gas being connected to the feedstock cooling unit and being arranged for providing carbon dioxide gas being formed in the feedstock cooling unit upon cooling a first feedstock by means of liquid carbon dioxide to the gasification unit, gas cooling unit, the filtering unit and/or the cleaning unit.

Thus, the carbon dioxide formed by the system is recycled thereby eliminating or at least greatly preventing CO₂ emission to the atmosphere. In addition, by providing carbon dioxide gas to the gasification unit and/or the gas cooling unit, the efficiency of the system is improved since an increased amount of carbon monoxide is formed in the gasification unit, and/or the gas cooling unit as compared to if not providing CO₂ to these units.

According to a further development, the first feedstock comprises hazardous and/or toxic substances, such as abattoir waste, drug residues, chemical and/or biological waste.

The system provides for production of hydrogen gas and liquid carbon dioxide from hazardous and/or toxic substances which typically otherwise end up as landfill and/or in incineration systems. The system provides a safe and environmental friendly way of taking care of the hazardous and/or toxic substances without emission of the hazardous and/or toxic substances to the environment.

According to a further development, the second feedstock comprises municipal waste, plant waste and/or auto shredder residue, ASR, preferably the second feedstock has a higher energy content as compared to the first feedstock.

By mixing the first feedstock with a second feedstock, preferably having a higher energy content as compared to the first feedstock, a more efficient gasification in the gasification unit is obtained.

According to a further development, the system further comprises a container for a third feedstock being connected to the gasification unit, wherein the third feedstock comprises liquid waste, such as solvents and/or waste oil.

The third feedstock provides for gasification of liquid substances, which may have a higher energy content as compared to the first and/or second feedstock, thereby providing an improved gasification. In addition, by providing the third feedstock comprising liquid waste separately without mixing it with the first and/or second feedstock it is avoided that the feedstock becomes sticky which may damage the system.

According to a further development, all carbon of the liquid carbon dioxide comprises carbon from the first, second and/or third feedstock(s) being gasified in the gasification unit.

Thus, the system is self-sufficient of carbon dioxide being used as cooling medium. No other material has to be provided to the system.

According to a further development, the first feedstock is cooled to a temperature of -75 to -1 °C, preferably -50 to -10 °C, most preferably -30 to -15 °C in the feedstock cooling unit.

By cooling the first feedstock to the proposed temperature, the first feedstock becomes frozen and easier to handle. In addition, a frozen feedstock can be crushed into smaller and/or uniform parts before entering the gasification unit.

According to a second aspect there is provided a method for production of hydrogen gas and liquid carbon dioxide from hazardous and toxic substances, the method comprises the following steps of: providing a first feedstock, cooling of the first feedstock by means of liquid carbon dioxide being fed directly into the process flow, thereby forming a frozen feedstock. The method further comprises crushing of the frozen feedstock, after the step of cooling, gasification of the frozen feedstock in presence of oxygen, thereby forming gaseous elements comprising carbon monoxide and hydrogen, wherein the liquid carbon dioxide comprises carbon from the first feedstock unit being gasified.

The method provides for the production of hydrogen gas and liquid carbon dioxide from hazardous and/or toxic substances and provides for the same advantages as discussed with regard to the system above.

Thus, the method provides for recycling of hazardous and/or toxic substances instead of that the substances being incinerated at incineration plants and minimizes landfill.

The method provides for production of hydrogen gas and liquid carbon dioxide from hazardous and/or toxic substances without the need for sorting and/or separation of the first feedstock prior to providing the first feedstock into the system. Thus, the method provides for a time and cost efficient production of hydrogen gas and liquid carbon dioxide from hazardous and/or toxic substances.

By using liquid carbon dioxide formed by the method itself as cooling medium for cooling the feedstock, the method is self-sufficient of carbon dioxide. The carbon dioxide is recycled which increases the yield of extracted hydrogen and is both cost efficient and energy saving since no other cooling medium has to be transported to the system within which the method is performed. Since the carbon dioxide is fed directly into the process flow a recirculation of carbon dioxide is achieved without emission of carbon dioxide to the environment.

By cooling the toxic and/or hazardous substances, the first feedstock becomes easier to handle since it is avoided that the first feedstock, which may be sticky, may damage the mixing unit and/or the crushing unit of the system in which the method is performed, and since a frozen feedstock can be crushed into smaller and/or uniform parts.

By the step of crushing, the feedstock is crushed into smaller and/or uniform parts which is a prerequisite for a complete gasification of the waste.

All rest products from the method are taken care of and there are no emission of toxic and/or hazardous substances to the environment.

According to a further development, the further comprises a step of unpacking the first feedstock 201b prior to the step of cooling of the first feedstock.

The hazardous and/or toxic substances are typically delivered to the system in sacks or sealed containers due to strict requirements with regards to transport of hazardous and/or toxic waste. The step of unpacking of the first feedstock thus provides for a safe removal of the sack or container. The method thus provides for a safe handling of toxic and/or hazardous substances since the exposure of the first feedstock is eliminated or at least greatly reduced.

According to a further development, the method further comprises a step of providing a second feedstock. The second feedstock comprises municipal waste, plant waste and/or auto shredder residue, ASR. Preferably, the second feedstock has a higher energy content as compared to the first feedstock, after the step of cooling of the first feedstock, and optionally a step of mixing the frozen feedstock with the second feedstock.

The step of providing a second feedstock, the second feedstock preferably having a higher energy content as the first feedstock provides for an improved gasification. By the optional step of mixing of the first and second feedstock provides for a more efficient gasification since the energy content is evenly distributed within the mixed feedstocks.

According to a further development, the method further comprises a step of providing a third feedstock. The third feedstock comprises liquid waste, such as solvents and/or waste oil, prior to the gasification.

The third feedstock provides for gasification of liquid substances, which may have a higher energy content as compared to the first and/or second feedstock. In addition, by providing the third feedstock separately without mixing it with the first and/or second feedstock comprising liquid waste it is avoided that the feedstock becomes sticky which may damage the system in which the method is performed.

According to a further development, all carbon of the liquid carbon dioxide comprises carbon from the first, second and/or third feedstock(s).

Thus, the system is self-sufficient of carbon dioxide being used as cooling medium.

According to a further development, the method further comprises the following steps of: cooling of the gaseous elements being formed during gasification and cleaning of the gaseous elements into carbon monoxide and hydrogen. The method further comprises the step of allowing the carbon monoxide of the gaseous elements to react with water according to the following formula: CO + H₂O => H₂ + CO₂. The method further comprises the step of separation of H₂ and CO₂ into a first stream of hydrogen gas and a second stream of carbon dioxide gas. The method further comprises a step of collecting the H₂ and CO₂ in sealed containers preferably the second stream of carbon dioxide gas is compressed and collected in liquid form.

The method provides for production of a high yield of hydrogen gas (H₂) having a high purity, which may be used for example industrial processes where hydrogen gas is needed, such as for reduction of iron ore. In addition, the method provides for collection of all of the carbon dioxide (CO₂) formed by the method thereby preventing CO₂ emission to the atmosphere.

According to a further development, carbon dioxide gas being formed upon cooling of the first feedstock by means of liquid carbon dioxide being fed directly into the process flow is provided upon the step of cooling the gaseous elements, wherein the carbon dioxide gas is allowed to react with methane of the gaseous elements and form hydrogen gas and carbon monoxide gas according to the following formula: CO₂ + CH₄ => 2CO + 2H₂.

By providing carbon dioxide gas upon to the step of cooling the gaseous elements an increased amount of carbon monoxide and hydrogen is formed in the gas cooling unit as compared to if not providing CO₂ to these units. Thus, the efficiency of the entire method is improved.

Thus, the carbon dioxide formed by the method is recycled thereby eliminating or at least greatly preventing CO₂ emission to the atmosphere.

According to a further development, carbon dioxide gas being formed upon cooling of the first feedstock by means of liquid carbon dioxide being fed directly into the process flow is provided upon the step of gasification, wherein the carbon dioxide gas is allowed to react with carbon from the first, second and/or third feedstock(s) upon the gasification in presence of a catalytic substance, said catalytic substance preferably being a metal, according to the formula: CO₂ + C => 2CO, and wherein the carbon dioxide as is allowed to react with methane of the gaseous elements according to the formula CO₂ + CH₄ => 2CO + 2H₂.

By providing carbon dioxide gas upon the step of gasification, an increased amount of carbon monoxide and hydrogen is formed upon the gasification step, thereby improving the efficiency of the entire method.

According to a further development, the first feedstock comprises hazardous and/or toxic substances, such as abattoir waste, drug residues, chemical and/or biological waste.

The method provides for production of hydrogen gas and liquid carbon dioxide from hazardous and/or toxic substances which typically otherwise end up as landfill and/or in incineration systems. The method provides a safe and environmental friendly way of taking care of the hazardous and/or toxic substances without emission of the hazardous and/or toxic substances to the environment.

According to a further development, in the step of cooling of the first feedstock, the feedstock is cooled to a temperature of -75 to -1 °C, preferably -50 to -10 °C, most preferably -30 to -15 °C.

By cooling the first feedstock to the proposed temperature above, the first feedstock becomes frozen and easier to handle since a frozen feedstock can be crushed into smaller and/or uniform parts before the step of gasification.

### BRIEF DESCRIPTION OF THE DRAWINGS

Fig. 1 schematically illustrates a system for production of hydrogen gas and liquid carbon dioxide according to the present disclosure.
Fig. 2 schematically illustrates a method for production of hydrogen gas and liquid carbon dioxide according to the present disclosure.

### DETAILED DESCRIPTION

The present disclosure relates to a system for production of hydrogen gas and liquid carbon dioxide from hazardous and/or toxic substances.

The system may be modular and comprise a number of different units which will be described more in detail below. The modularity of the system may facilitate design and redesign of the system. The system may be tailor-made for example depending on the type and size of the feedstock(s) being fed into the system. Standard conduits for liquid and gases may be used for connecting the different units of the system to each other.

In one example, the system may be arranged near or as a replacement for a waste incineration plant.

By hazardous and/or toxic substances is meant substances which is risky to handle due to toxicity and/or infectious content. By a hazardous substance also meant a substance that may be ignitable, corrosive, reactive and/or toxic. By toxic is meant a substance which when ingested or absorbed can be fatal or harmful to a person.

Examples of hazardous and/or toxic substances are abattoir waste, drug residues, chemical and/or biological waste.

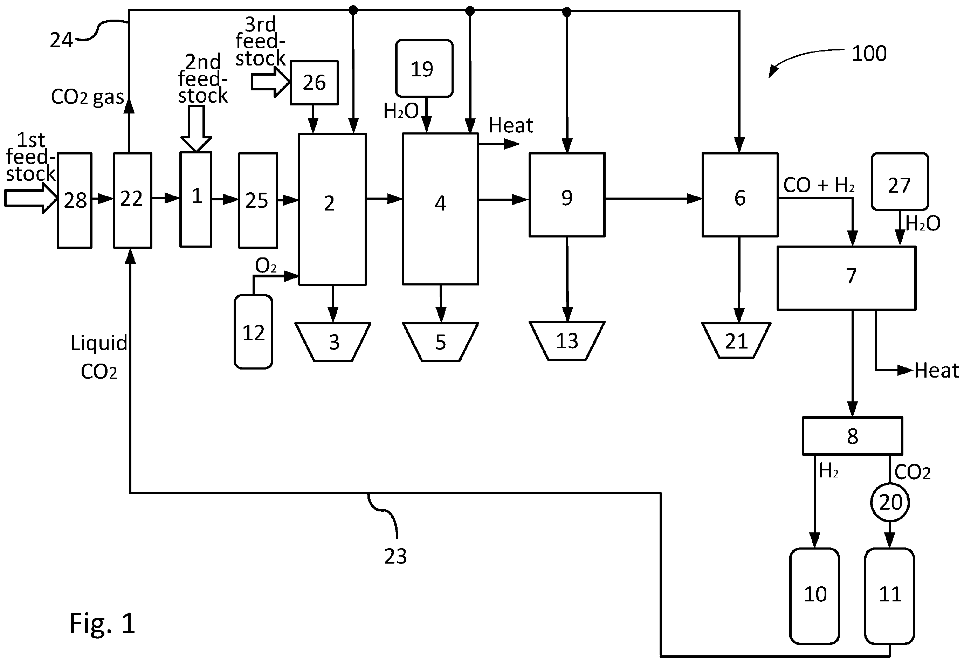

Fig. 1 schematically illustrates an example of a system for production of hydrogen gas and liquid carbon dioxide from hazardous and/or toxic substances.

Preferably, and as illustrated in Fig. 1, the system 100 for production of hydrogen gas and liquid carbon dioxide from hazardous and/or toxic substances is a closed system, thus there is no emission of carbon dioxide or any other gases to the environment.

The system 100 for production of hydrogen gas and liquid carbon dioxide from hazardous and/or toxic substances comprises a feedstock cooling unit 22 being arranged for cooling a first feedstock by means of liquid carbon dioxide being fed directly into the process flow, thereby forming a frozen feedstock. The system further comprises a crushing unit 25 being connected to the feedstock cooling unit 22 and being arranged for crushing the frozen feedstock.

The system further comprises a gasification unit 2 being connected to the feedstock cooling unit 22 and being arranged for gasification of the frozen feedstock in presence of oxygen into gaseous elements comprising carbon monoxide and hydrogen.

The carbon dioxide comprises carbon from the first feedstock being gasified in the gasification unit.

The system 100 may comprise a connection for cooling means 23 being connected to the feedstock cooling unit 22 and being arranged to provide a liquid carbon dioxide to the feedstock cooling unit 22. The liquid carbon dioxide may be formed by the system 100 itself, wherein the carbon dioxide is fed directly into the process flow and thus a recirculation of carbon dioxide and an increased yield of the extracted hydrogen is achieved.

The first feedstock may comprise hazardous and/or toxic substances, such as abattoir waste, drug residues, chemical and/or biological waste. The first feedstock may be packed in a suitable way for transport from the waste source to the gasification plant. The first feedstock may typically be delivered to the system in sacks or sealed containers due to strict requirements with regards to transport of hazardous and/or toxic waste.

The first feedstock may be cooled to a temperature of -75 to -1 °C, preferably -50 to -10 °C, most preferably -30 to -15 °C in the feedstock cooling unit 22. This means that the first feedstock forms a frozen solid within the feedstock cooling unit 22.

In one example, about 1 kg carbon dioxide (CO₂) is required to cool, i.e. freeze, 1 kg of the first feedstock to a temperature of about -25 °C. The cooling medium may be fed directly into the process flow, for example by means of spraying the carbon dioxide into the system.

In one example, the system further comprises a connection for CO₂ gas 24 being connected to the feedstock cooling unit 22 and being arranged for providing carbon dioxide gas being formed in the feedstock cooling unit 22 upon cooling a first feedstock by means of liquid carbon dioxide to the gasification unit 2, the filtering unit 9 and/or the cleaning unit 6.

If carbon dioxide gas is provided to the gasification unit 2, the carbon dioxide gas is allowed to react with carbon from the first, second and/or third feedstock(s) upon the gasification in presence of a catalytic substance, said catalytic substance preferably being a metal, according to the formula: CO₂ + C => 2CO. The catalytic substance is preferably a metal, such as Fe or Cu. In one example, the catalytic substance is comprised in the second feedstock. For example, the catalytic substance may be metal(s) and/or metal alloy(s) being comprised in auto shredder residue (ASR). ASR may comprise glass, fiber, rubber, automobile liquids and plastics, spring steel, and cablings comprising metals. Alternatively, the catalytic substance is provided, either together with the first, second and/or third feedstock(s), or directly into the gasification unit 2 by means of a separate connection (not shown). In the latter example, the catalytic substance may be in the form of a metal powder.

The reaction of CO₂ + C => 2CO typically takes place at temperatures of above 1200 °C. Thus, the reaction typically takes place in the pyrolytic and/or plasma zone(s) of the gasification unit. The reaction of CO₂ + CH₄ => 2CO + 2H₂ typically takes place at temperatures of above 900 °C. Thus, the reaction typically takes place in the pyrolytic zone of the gasification unit. Thus, by providing carbon dioxide to the gasification unit 2, an increased amount of carbon monoxide and hydrogen is formed in the gasification unit 2 which further improves the efficiency of the system.

If carbon dioxide gas is provided to the gas cooling unit 4, the carbon dioxide gas is allowed to react with methane of the gaseous elements and form hydrogen gas and carbon monoxide gas according to the following formula: CO₂ + CH₄ => 2CO + 2H₂. This chemical reaction typically takes place at a temperature of above 900 °C. Since the chemical reaction takes place at temperatures above 900 °C, the carbon dioxide gas is preferably provided to the gas cooling unit 4 when the gaseous elements still has a high temperature after exiting the gasification unit 2. The above reaction is an endotherm reaction and contributes to the cooling of the gaseous elements in the gas cooling unit 4. Thus, by providing carbon dioxide to the gas cooling unit 4, an increased amount of carbon monoxide and hydrogen is formed in the gas cooling unit 4 which further improves the efficiency of the system.

If carbon dioxide gas is provided to the filtering unit 9 and/or the cleaning unit 6, the above chemical reactions typically do not take place due to too low temperatures (below 100 °C) of the gaseous elements within these units. However, by providing carbon dioxide to the filtering unit 9 and/or cleaning unit 6 recirculation of the carbon dioxide formed by the system is obtained.

Typically, the main portion of the liquid carbon dioxide being fed directly into the process flow, thereby forming a frozen feedstock may be fed (in gas phase) to the gasification unit 2, to the cleaning unit 6 and/or the filtering unit 9 via the connection for CO₂ gas 24. Some of the carbon dioxide being fed directly into the process flow may also follow the process flow (in gas phase) into the system 100, i.e. the mixing unit 1, the crushing unit 25 and/or the gasification unit 2.

The system 100 may comprise an unpacking unit 28 being arranged for unpacking the first feedstock, prior to the first feedstock being cooled by the feedstock cooling unit (22), and being connected to the feedstock cooling unit 22.

The hazardous and/or toxic waste is typically delivered to the system packaged in, for example, sacks or other types of sealed packaging. The unpacking unit 28 may for example rip up the sack or container by a cutting edge.

In one example, the system comprises a sluice arrangement (not shown) into which the first feedstock is fed before entering unpacking unit 28 and/or the cooling unit 22. In one example, the sluice arrangement is comprised within the unpacking unit 28. One purpose of the sluice arrangement and/or the unpacking unit 28 is to avoid that an operator of the system is exposed to the hazardous and/or toxic substances, i.e. to the first feedstock, being provided to the system. Preferably, the sluice arrangement and/or the unpacking unit 28 comprises seals and/or sluices, such that there is no leakage to the environment of carbon dioxide being used for cooling in the cooling unit 22 when the first feedstock is provided to the system 100. Another purpose of the sluice arrangement and/or the unpacking unit 28 is to avoid emission of carbon dioxide from the system to the atmosphere. Thus, by the sluice arrangement and/or the unpacking unit 28, the removal of the sealed packaged takes place within the system 100.

Preferably, the system 100 is a closed system such there is no leakage of carbon dioxide being formed by the system to the environment.

The system 100 may further comprise a mixing unit 1 being connected to the feedstock cooling unit 22 and being arranged for mixing the frozen feedstock with a second feedstock prior to gasification of the frozen feedstock in the gasification unit 2. The second feedstock may be fed into the mixing unit 1. Preferably, the mixing unit 1 is provided with a sluice arrangement such that there is no leakage of carbon dioxide from to the environment upon feeding of the second feedstock into the mixing unit 1.

This mixing of the frozen feedstock may be suitable when the first feedstock has a relatively low energy content (below 20 MJ/kg). By mixing the first feedstock with a second feedstock, preferably the second feedstock has a higher energy content as compared to the first feedstock, a more efficient gasification process may be obtained.

The second feedstock may comprise municipal waste, plant waste and/or auto shredder residue, ASR, preferably the second feedstock has a higher energy content as compared to the first feedstock, in order to provide a mixed feedstock with an energy content above 20 MJ/kg.

The system comprises a crushing unit 25 being connected to the feedstock cooling unit 22 and being arranged for crushing the frozen feedstock. The crushing may be performed of the first feedstock, and optionally of both the first and the second feedstock. Crushing of the feedstock may be performed in order to provide a feedstock comprising smaller and/or uniform parts. The diameter of each of the crushed parts may be in the range of about 7 to 1 cm, preferably in the range of 5 to 1 cm, most preferable in the range of 3 to 1 cm.

The system may comprise a plurality of mixing units 1 and/or crushing units 25 in order to obtain a desired size and/or shape of the first feedstock and optionally also of the second feedstock. In one example, the mixing unit 1 and the crushing unit 25 may be a combined unit for mixing and crushing the first feedstock and the second feedstock. In yet an example, the feedstock cooling unit 22 may comprise a stirrer or a mixer being arranged for stirring the first feedstock in order to prevent it the frozen first feedstock from lump together.

The system further comprises a gasification unit 2 being connected to the feedstock cooling unit 22 and being arranged for gasification of the frozen feedstock in presence of oxygen into gaseous elements comprising carbon monoxide and hydrogen. If the first feedstock is mixed with a second feedstock and/or if a third feedstock third is fed directly into the gasification unit 2, the gasification unit may be arranged for gasification of also the second and/or third feedstocks. In one example, the gasification unit is a plasma gasification unit. The gasification unit 2 may comprise a pyrolytic zone (not shown) and a plasma zone (not shown). Oxygen is provided in order to form carbon monoxide, CO, of carbon being released upon gasification. The oxygen may be produced in an air distillation module and may be provided by an external oxygen source 12. The amount of oxygen provided and the temperature upon gasification may depend on the type and energy content of the feedstock. The more organic elements in the waste the more oxygen is needed to form carbon monoxide from the carbon content. The provision of oxygen is based on the temperature in the pyrolytic zone of the gasification unit 2. For example, if the temperature is too low in order to obtain a desired degree of gasification, a higher amount of oxygen is provided in order to maintain a desired temperature in the pyrolytic zone of the gasification unit 2. The predetermined amount of oxygen is provided to both the pyrolytic zone and the plasma zone such that as much carbon as possible is converted into carbon monoxide. CO is formed at higher temperatures as compared to other oxides, such as H₂O and CO₂, and preferably, a predetermined amount of oxygen is provided such that the main portion of the carbon being gasified in the gasification unit 2 forms CO.

The temperature upon gasification of the feedstock, i.e. in the pyrolytic zone, may be in the range of about 600-1200 °C, preferably in the range of 725-1125 °C, most preferably in the range of 850-1050 °C. The gasified feedstock, i.e. ash as well as not completely gasified elements, may then be provided to the plasma zone of the gasification unit 2. The plasma zone of the gasification unit 2 may be heated to a temperature of above 2500°C. The plasma zone may comprise a light arc in which the formation into plasma of the gasified feedstock takes place. The light arc itself may have a temperature of about 8000 °C. Due to the very high temperature, the chemical bonds of the compounds of the feedstock are broken and the compounds are decomposed into a plasma, which is denoted as gaseous elements below.

The gaseous elements formed in the gasification unit 2 comprises carbon monoxide and hydrogen, also known as syngas. Depending on the process in which the syngas is formed, such as the feedstock and temperatures in the pyrolytic zone and the plasma zone of the gasification unit 2, the syngas may also comprise small amounts of other gases, such as water (H₂O), carbon dioxide (CO₂), nitrogen (N₂) and methane (CH₄). As an example, cooled syngas may comprise about 2 % N₂ and about 10-15% CO₂. Before being cooled, as will be described more in detail below, the syngas may also comprise up to 25 % of H₂O. When syngas is cooled to temperature of below 100 °C, preferably to a temperature in the range of 90 to 20 °C, the main portion of H₂O is condensed and thereby separated from the syngas.

Upon formation of the syngas, there may also be some residual materials formed in the gasification unit 2, such as inorganic materials, which are condensed before the gas is leaving the plasma zone or is not fully decomposed into plasma. These materials may be collected in a slag collection unit 3. The materials collected in the slag collection unit 3 are typically materials having a relatively high boiling point. Examples of such materials are Si and Cu, and other metallic compounds. The materials collected in the slag collection unit 3 are inert and may be recycled and for example be reused in manufacturing industry. Poisonous metallic materials such as cadmium, may be collected into one or more slag collection units 5, 13, 21 being arranged for collecting materials having relatively low boiling points and being connected to e.g. the cooling unit 4, filtering unit 9 and/or the cleaning unit 6.

The system 100 may further comprise a container 26 for a third feedstock being connected to the gasification unit 2, wherein the third feedstock comprises liquid waste, such as solvents and/or waste oil. Thus, the third feedstock may be fed directly into the gasification unit 2 where it may be gasified together with the first feedstock and optionally the second feedstock. Preferably, the third feedstock is fed directly into the gasification unit 2 via a peristaltic pump and a sealed pipe system (not shown) such that leakage of gases from the gasification unit to the surrounding environment is avoided.

Preferably, the third feedstock comprising liquid waste is not mixed with the first and/or second feedstock. By providing the third feedstock separately without mixing it with the first and/or second feedstock comprising liquid waste it is avoided that the feedstock becomes sticky which may damage the system. A reason for not cooling also the second feedstock and/or the third feedstock is that it is a waste of cooling medium, i.e. liquid carbon dioxide, and it takes more energy for gasifying a cooled feedstock as compared to a feedstock not being cooled.

The liquid carbon dioxide comprises carbon from the first feedstock being gasified in the gasification unit 2. All carbon of the liquid carbon dioxide may comprise carbon from the first, second and/or third feedstock(s) being gasified in the gasification unit. This should be understood as no other carbon except from the carbon of the first, second and/or third feedstock(s) is added to the system.

The system 100 may further comprise a gas cooling unit 4 being connected to the gasification unit 2 and being arranged for cooling the gaseous elements being formed in the gasification unit 2. The cooling unit 4 may comprise a radiation or convection cooler (not shown). Preferably, the gaseous elements are cooled to a temperature of below 100 °C in the cooling unit 4. The cooling may be performed by a water being provided from an external container 19.

During cooling the main portion of H₂O of the gaseous elements is condensed and water-soluble elements, for example water-soluble oxides, of the gaseous elements are solved in the condensed water and thereby separated from the syngas. The system 100 may further comprise a filtering unit 9 and/or a cleaning unit 6 being connected to the gas cooling unit 4 and being arranged for cleaning the gaseous elements into carbon monoxide and hydrogen.

The filtering unit 9 may comprise at least one filter, preferably the filtering unit 9 comprises a plurality of filters. The filter(s) may be arranged to collect particulate compounds. The filter(s) may be at least one mechanical filter, such as a baghouse filter. The filter(s) may be cleaned by pressurized recirculated syngas at a predetermined time interval, or when needed due to a large amount of particles being collected by the at least one filter. The particulate compounds being collected by the at least one filter may be collected in a vessel 13.

The cleaning unit 6 may comprise filters and/or a cleaning liquid which is circulated in the cleaning unit 6 by means of a pump system (not shown). In one example, the gaseous elements are firstly led through one or more filters in order to purify the syngas from undesired compounds, followed by "showering" of the gaseous elements by the cleaning liquid. The cleaning liquid may typically be water. In this step, water (H₂O) and water-soluble compounds may be separated from the gaseous elements. The extracted syngas may be repeatedly circulated within the cleaning unit 6 until the syngas has reached a desired purity.

The system 100 may comprise a plurality of filtering units 9 and/or cleaning units 6 arranged after one another. In one example, the plurality of filtering units 9 and/or cleaning units 6 may comprise different types of filters and/or cleaning liquids. The syngas resulting from the cleaning unit 6 typically comprises hydrogen gas (H₂) and carbon monoxide (CO) in the ratio of 1:1. In addition, the syngas may comprise small amounts of the carbon dioxide gas (CO₂), nitrogen gas (N₂) and traces of methane gas (CH₄).

The system 100 may further comprise a water-gas-shift unit 7 being connected to the cleaning unit 6 or the filtering unit 9 and being arranged for allowing the carbon monoxide of the gaseous elements to react with water according to the following formula: CO + H₂O => H₂ + CO₂. The water may be provided to the water-gas-shift unit 7 as water steam via an external container 27. The water-gas-shift unit 7 may be a commercially available water-gas-shift unit. The water-gas-shift unit 7 may produce heat which may be used for heating purposes, for example within the building in which the system 100 is arranged.

Preferably, the water-gas-shift unit 7 is connected to the cleaning unit 6 or to the filtering unit 7. In one further example, the water-gas-shift unit 7 is connected directly to the gas cooling unit 4.

In yet an example, the heat generated by the water-gas-shift unit 7 may be transferred from the system to a heat consumer, such as via district heating.

The system may further comprise a hydrogen separation unit 8 being connected to the water-gas-shift unit 7 and being arranged for separation of H₂ and CO₂ into a first stream of hydrogen gas and a second stream of carbon dioxide gas. The resulting H₂ being separated by the hydrogen separation unit typically has a purity in the range of 99.99 %. The hydrogen separation unit 8 may be a pressure swing adsorption unit.

The system 100 may further comprise a first sealed container 10 being arranged for collection of the first stream of hydrogen gas and a second sealed container 11 being arranged for collection of the second stream of carbon dioxide gas. The second stream of carbon dioxide gas may preferably be compressed by a compressor 20 and liquefied before collection into the second sealed container 11. CO₂ enters liquid phase at -78 °C at atmospheric pressure. At a higher pressure, the carbon dioxide becomes liquefied at a higher temperature. As discussed above, the collected carbon dioxide may be used as cooling medium for cooling the first feedstock. Excess of carbon dioxide, not being used as cooling medium, may be subject to carbon capture and utilization (CCU). CCU is a process where carbon dioxide is captured and is recycled for further usage. The aim of CCU is to convert the captured carbon dioxide into e.g. plastics or biofuel in a controlled way, thereby preventing the carbon dioxide from reaching the atmosphere. Alternatively, the carbon dioxide may be subject to carbon capture and storage (CCS). CCS is a process where the carbon dioxide is permanently stored in an underground geological formation, thereby preventing the CO₂ from reaching the atmosphere.

In one example, the liquid carbon dioxide is provided directly from the hydrogen separation unit 8 to the feedstock cooling unit 22, optionally without first being collected in a second sealed container 11. Preferably, the second stream of carbon dioxide gas is liquified by means of a compressor 20. In yet an example, the second stream of carbon dioxide gas is liquified by means of cooling.

The first sealed container 10 may be arranged for collection of the first stream of hydrogen gas. The hydrogen being collected in the first sealed container 10 may be used in for example industrial processes and fuel cells. The system 100 may for example be arranged at, and connected to, an industrial plant requiring hydrogen in their processes and thereby transport of the hydrogen can be eliminated or reduced.

The present disclosure further relates to a method for production of hydrogen gas and liquid carbon dioxide from hazardous and/or toxic substances.

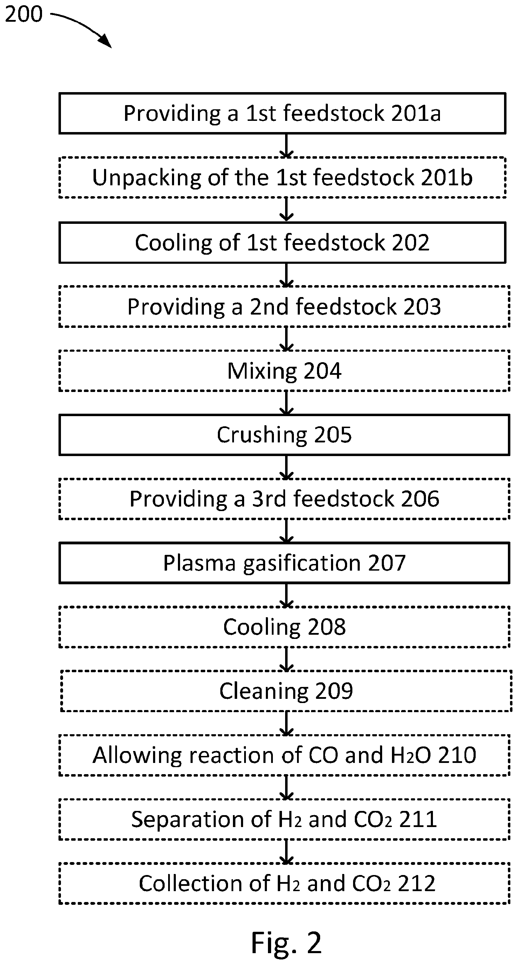

Fig. 2 schematically illustrates a method for production of hydrogen and carbon dioxide from hazardous and/or toxic substances.

The method comprises a step of providing a first feedstock 201a. The first feedstock may comprise hazardous and/or toxic substances, such as abattoir waste, drug residues, chemical and/or biological waste. The method may further comprise a step of unpacking the first feedstock 201b prior to the step of cooling the first feedstock.

The method comprises a step of cooling of the first feedstock 202 by means of liquid carbon dioxide being fed directly into the process flow, thereby forming a frozen feedstock. The cooling of the feedstock is performed in a feedstock cooling unit which is discussed more in detail with reference to the system above.

In the step of cooling of the first feedstock, the feedstock is cooled to a temperature of -75 to -1 °C, preferably -50 to -10 °C, most preferably -30 to -15 °C. This means that the first feedstock forms a frozen solid by means of the step of cooling.

The method 200 may further comprising a step of providing a second feedstock 203, after the step of cooling of the first feedstock 202, and optionally a step of mixing the frozen feedstock with the second feedstock 204. The second feedstock may comprise municipal waste, plant waste and/or auto shredder residue, ASR, preferably the second feedstock has a higher energy content as compared to the first feedstock.

The method may comprise a plurality of steps of mixing and/or crushing the first and second feedstock(s). In one example, there may be a combined step of mixing and crushing the first and/or second feedstock.

The method further comprises a step of crushing of the frozen feedstock 205, after the step of cooling. Optionally, the step of crushing is performed also of the second feedstock. Crushing of the feedstock may be performed in order to provide a feedstock comprising smaller and/or uniform parts. The diameter of each of the crushed parts may be in the range of about 7 to 1 cm, preferably in the range of 5 to 1 cm, most preferable in the range of 3 to 1 cm.

The method may further comprise a step of providing a third feedstock 206. The third feedstock may comprise liquid waste, such as solvents and/or waste oil. Preferably, the third feedstock is fed directly into the gasification unit where it may be gasified with the first feedstock and optionally the second feedstock. Preferably, the third feedstock comprising liquid waste is not mixed with the first and/or second feedstock. The third feedstock may provide for an even more efficient gasification due to a higher energy content. In addition, by providing the third feedstock separately without mixing it with the first and/or second feedstock comprising liquid waste it is avoided that the feedstock becomes sticky which may damage the system in which the method is performed.

The method 200 further comprises a step of gasification 207 of the feedstock in presence of oxygen, thereby forming gaseous elements comprising carbon monoxide and hydrogen. Preferably, the gasification is plasma gasification. The gasification takes place in a gasification unit which is discussed more in detail with reference to the system above. Preferably, the gasification unit is a plasma gasification unit.

The gasification unit may comprise a pyrolytic zone (not shown) and a plasma zone (not shown). Oxygen is provided in order to form carbon monoxide, CO, of carbon being released upon gasification. The oxygen may be produced in air distillation module and may be provided by an external oxygen source. The amount of oxygen provided and the temperature upon gasification may depend on the desired degree of gasification of the feedstock. The provision of oxygen is based on the temperature in the pyrolytic zone of the gasification unit. For example, if the temperature is too low in order to obtain a desired degree of gasification, a higher amount of oxygen is provided in order to maintain a desired temperature in the gasification unit. The predetermined amount of oxygen is provided to both the pyrolytic zone and the plasma zone such that as much carbon as possible is converted into carbon monoxide. CO is formed at higher temperatures as compared to other oxides, such as H₂O and CO₂, and preferably, a predetermined amount of oxygen is provided such that the main portion of the carbon being gasified in the gasification unit forms CO.

The temperature upon gasification of the feedstock, i.e. in the pyrolytic zone, may be in the range of about 600-1200 °C, preferably in the range of 725-1125 °C, most preferably in the range of 850-1050 °C. The gasified feedstock, i.e. ash as well as not completely gasified elements, may then be provided to the plasma zone of the gasification unit. The plasma zone of the gasification unit 2 may be heated to a temperature of above 2500°C. The plasma zone may comprise a light arc in which the formation into plasma of the gasified feedstock takes place. The light arc itself may have a temperature of about 8000 °C. Due to the very high temperature, the chemical bonds of the compounds of the gasified feedstock are broken and the compounds may be decomposed into a plasma, denoted as gaseous elements below.

The gaseous elements formed in the gasification unit comprises carbon monoxide and hydrogen, also known as syngas. Syngas is a gas mixture comprising primarily of H₂ and CO. Depending on the process in which the syngas is formed, such as the material of the feedstock and temperatures in the pyrolytic zone and the plasma zone of the gasification unit 2, the syngas may also comprise small amounts of other gases, such as H₂O, CO₂, N₂ and CH₄. As an example, cooled syngas may comprise about 2 % N₂ and about 10-15% CO₂. Before being cooled, as will be described more in detail below, the syngas may also comprise up to 25 % of H₂O. When syngas is cooled to temperature of below 100 °C, preferably to a temperature in the range of 90 to 20 °C, the main portion of H₂O is condensed and thereby separated from the syngas.

Upon formation of the syngas, there may also be some residual materials formed in the gasification unit 2, such as inorganic materials, which are condensed before the gas is leaving the plasma zone or is not fully decomposed into plasma. These materials form an inert slag and may be collected and recycled, and for example be reused in manufacturing industry. Examples of such materials are Si and Cu, and other metallic compounds.

The method 200 may further comprise a step of cooling of the gaseous elements 208 being formed during gasification. The cooling of the gaseous elements may be performed in a gas cooling unit which is discussed more in detail with reference to the system above. The cooling unit may comprise a radiation or convection cooler. Preferably, the gaseous elements are cooled to a temperature of below 100 °C.

The method 200 may further comprise a step of cleaning of the gaseous elements 209 into carbon monoxide and hydrogen. Preferably, the cleaned gaseous elements comprises carbon monoxide and hydrogen only. The step of cleaning of the gaseous elements may be performed in a filtering unit and/or a cleaning unit which are discussed more in detail with reference to the system above.

The filtering unit may comprise at least one filter, preferably the filtering unit comprises a plurality of filters. The filter(s) may be arranged to collect particulate compounds. The filter(s) may be a mechanical filter, such as a baghouse filter. The filter(s) may be cleaned by pressurized recirculated syngas at a predetermined time interval, or when needed due to a large amount of particles being collected by the at least one filter. The particulate compounds being collected by the at least one filter may be collected in a vessel.

The cleaning unit may comprise filters and/or a cleaning liquid which is circulated in the cleaning unit by means of a pump system. In one example, the gaseous elements are firstly led through one or more filters in order to purify the syngas from undesired compounds, followed by "showering" of the gaseous elements by the cleaning liquid. The cleaning liquid may typically be water. In this step, water (H₂O) and water-soluble compounds may be separated from the gaseous elements. The extracted syngas may be repeatedly circulated within the cleaning unit 6 until the syngas has reached a desired purity.

The step of cleaning may be performed in a plurality of steps. The system may comprise a plurality of filtering units and/or cleaning units arranged after one another. In one example, the plurality of filtering units and/or cleaning units may comprise different types of filters and/or cleaning liquids. The syngas resulting from the cleaning unit typically comprises hydrogen gas (H₂) and carbon monoxide (CO) in the ratio of 1:1. In addition, the syngas may comprise small amounts of the recycled carbon dioxide gas (CO₂), nitrogen gas (N₂) and traces of methane gas (CH₄).

In one example, carbon dioxide gas being formed upon cooling of the first feedstock 202 by means of liquid carbon dioxide being fed directly into the process flow is provided upon the step of cooling the gaseous elements 208, wherein the carbon dioxide gas is allowed to react with methane of the gaseous elements and form hydrogen gas and carbon monoxide gas according to the following formula: CO₂ + CH₄ => 2CO + 2H₂. This further improves the efficiency of the method since an increased amount of carbon monoxide and hydrogen is formed upon the step of cooling.

The above chemical reaction typically takes place at a temperature of above 900 °C. Since the chemical reaction takes place at temperatures above 900 °C, the carbon dioxide gas is preferably provided upon the step of cooling of the gaseous elements when the gaseous elements still has a high temperature after the step of gasification. The above reaction is an endotherm reaction and contributes to the cooling of the gaseous elements during the step of cooling. Thus, by providing carbon dioxide upon the step of cooling, an increased amount of carbon monoxide and hydrogen is formed upon the step of cooling.

In one example, carbon dioxide gas being formed upon cooling of the first feedstock 202 by means of liquid carbon dioxide being fed directly into the process flow is provided upon the step of gasification, wherein the carbon dioxide gas is allowed to react with carbon from the first, second and/or third feedstock(s) upon the gasification in presence of a catalytic substance, said catalytic substance preferably being a metal, according to the formula: CO₂ + C => 2CO and wherein the carbon dioxide as is also allowed to react with methane of the gaseous elements according to the formula CO₂ + CH₄ => 2CO + 2H₂.

The reaction of CO₂ + C => 2CO typically takes place at temperatures of above 1200 °C. Thus, the reaction typically takes place upon the step of gasification, i.e. in the pyrolytic and/or plasma zone(s) of the gasification unit. The reaction of CO₂ + CH₄ => 2CO + 2Hz typically takes place at temperatures of above 900 °C. Thus, the reaction typically takes place upon the step of gasification, i.e. in the pyrolytic zone of the gasification unit. It may also take place prior to the step of cooling in the cooling unit when the gaseous elements still has a high temperature after the gasification.

By providing carbon dioxide upon the step of gasification and/or the step of cooling, an increased amount of carbon monoxide and hydrogen is formed which further improves the efficiency of the method.

The catalytic substance is preferably a metal, such as Fe or Cu. In one example, the catalytic substance is comprised in the second feedstock. For example, the catalytic substance may be metal(s) and/or metal alloy(s) being comprised in auto shredder residue (ASR). Alternatively, the catalytic substance is provided together with the first, second and/or third feedstock(s), or directly into the step of gasification. In the latter example, the catalytic substance may be provided in the form of a metal powder.

The method may comprise a step of allowing the carbon monoxide of the gaseous elements to react with water 210 according to the following formula: CO + H₂O => H₂ + CO₂. The step of allowing the carbon monoxide of the gaseous elements to react with water may be performed by a water-gas-shift unit and is discussed more in detail with reference to the system above. The water is provided to the water-gas-shift unit as water steam via an external container. The water-gas-shift unit may be a commercially available water-gas-shift unit.

The method may comprise a step of separation of H₂ and CO₂ 211 into a first stream of hydrogen gas and a second stream of carbon dioxide gas, and a step of collecting the H₂ and CO₂ 212 in sealed containers. The step of separation of H₂ and CO₂ may be performed by means of a hydrogen separation unit which is discussed in more detail with reference to the system above. The resulting H₂ being separated by the hydrogen separation unit typically has a purity in the range of 99.99 %. The hydrogen separation unit may be a pressure swing adsorption unit.

The method may further comprise a step of collecting the H₂ and CO₂ 212 in sealed containers. Preferably, the second stream of carbon dioxide gas is compressed and collected in liquid form. As discussed above, the collected carbon dioxide is used as cooling medium for cooling the first feedstock. Excess of carbon dioxide, not being used as cooling medium, may be subject to carbon capture and utilization (CCU). CCU is a process where carbon dioxide is captured and is recycled for further usage. The aim of CCU is to convert the captured carbon dioxide into e.g. plastics or biofuel in a controlled way, thereby preventing the carbon dioxide from reaching the atmosphere. Alternatively, the carbon dioxide may be subject to carbon capture and storage (CCS). CCS is a process where the carbon dioxide is permanently stored in an underground geological formation, thereby preventing the CO₂ from reaching the atmosphere.

The hydrogen may be used in for example industrial processes and in fuel cells. The system performing the method may for example be arranged at, and connected to, an industrial plant requiring hydrogen in their processes and thereby transport of the hydrogen can be eliminated or reduced.

## Claims

1. System (100) for production of hydrogen gas and liquid carbon dioxide from hazardous and/or toxic substances, said system comprising:
a feedstock cooling unit (22) being arranged for cooling a first feedstock by means of liquid carbon dioxide being fed directly into the process flow, thereby forming a frozen feedstock,
a crushing unit (25) being connected to the feedstock cooling unit (22) and being arranged for crushing the frozen feedstock,
a gasification unit (2) being connected to the feedstock cooling unit (22) and being arranged for gasification of the frozen feedstock in presence of oxygen into gaseous elements comprising carbon monoxide and hydrogen,
wherein said liquid carbon dioxide comprises carbon from the first feedstock being gasified in the gasification unit, the system (100) optionally further comprising:
a gas cooling unit (4) being connected to the gasification unit (2) and being arranged for cooling the gaseous elements being formed in the gasification unit,
optionally a filtering unit (9) and/or a cleaning unit (6) being connected to the gas cooling unit (4) and being arranged for cleaning the gaseous elements into carbon monoxide and hydrogen,
a water-gas-shift unit (7) being connected to the cleaning unit (6), the filtering unit (9), or the gas cooling unit (4), and being arranged for allowing the carbon monoxide of the gaseous elements to react with water according to the following formula: CO + H₂O => H₂ + CO₂,
a hydrogen separation unit (8) being connected to the water-gas-shift unit (7) and being arranged for separation of H₂ and CO₂ into a first stream of hydrogen gas and a second stream of carbon dioxide gas, and
optionally a first sealed container (10) being arranged for collection of the first stream of hydrogen gas and optionally a second sealed container (11) being arranged for collection of the second stream of carbon dioxide gas, preferably the second stream of carbon dioxide gas is compressed by a compressor (20) and collected in liquid form.

2. The system (100) according to any of the preceding claims, further comprising an unpacking unit (28) being arranged for unpacking the first feedstock prior to the first feedstock being cooled by the feedstock cooling unit (22), and being connected to the feedstock cooling unit (22), and/or a mixing unit (1) being connected to the feedstock cooling unit (22) and being arranged for mixing the frozen feedstock with a second feedstock prior to gasification of the frozen feedstock in the gasification unit (2).

3. The system (100) according to any of the preceding claims, further comprising a connection for cooling means (23) being connected to the feedstock cooling unit (22) and being arranged to provide the liquid carbon dioxide to the feedstock cooling unit (22), wherein the liquid carbon dioxide formed by the system (100) itself, and wherein the carbon dioxide is fed directly into the process flow and thus a recirculation of carbon dioxide is achieved .

4. The system (100) according to any of the proceeding claims, further comprising a connection for CO₂ gas (24) being connected to the feedstock cooling unit (22) and being arranged for providing carbon dioxide gas being formed in the feedstock cooling unit (1) upon cooling a first feedstock by means of liquid carbon dioxide to the gasification unit (2), gas cooling unit (4), the filtering unit (9) and/or the cleaning unit (6).

5. The system (100) according to any of the preceding claims, wherein the first feedstock comprises hazardous and/or toxic substances, such as abattoir waste, drug residues, chemical and/or biological waste.

6. The system (100) according to any of the preceding claims, wherein the second feedstock comprises municipal waste, plant waste and/or auto shredder residue, ASR, preferably the second feedstock has a higher energy content as compared to the first feedstock.

7. The system (100) according to any of the preceding claims, further comprising a container (26) for a third feedstock being connected to the gasification unit (2), wherein the third feedstock comprises liquid waste, such as solvents and/or waste oil.

8. The system according to any of the preceding claims, wherein all carbon of the liquid carbon dioxide comprises carbon from the first, second and/or third feedstock(s) being gasified in the gasification unit.

9. The system (100) according to any of the preceding claims, wherein the first feedstock is cooled to a temperature of -75 to -1 °C, preferably -50 to -10 °C, most preferably -30 to -15 °C in the feedstock cooling unit (22).

10. Method (200) for production of hydrogen gas and liquid carbon dioxide from hazardous and/or toxic substances, the method comprising the following steps of:
providing a first feedstock (201a),
cooling of the first feedstock (202) by means of liquid carbon dioxide being fed directly into the process flow, thereby forming a frozen feedstock,
crushing of the frozen feedstock (205), after the step of cooling,
gasification (207) of the frozen feedstock in presence of oxygen, thereby forming gaseous elements comprising carbon monoxide and hydrogen,
wherein said liquid carbon dioxide comprises carbon from the first feedstock unit being gasified,
optionally the method (200) is further comprising a step of unpacking the first feedstock 201b prior to the step of cooling of the first feedstock,
the method (200) optionally further comprising a step of providing a second feedstock (203), said second feedstock comprising municipal waste, plant waste and/or auto shredder residue, ASR, preferably the second feedstock has a higher energy content as compared to the first feedstock, after the step of cooling of the first feedstock (202), and optionally a step of mixing the frozen feedstock with the second feedstock (204).

11. The method (200) according to claim 10, further comprising a step of providing a third feedstock (206), said third feedstock comprising liquid waste, such as solvents and/or waste oil, prior to the gasification (207).

12. The method according to any of the claims 10 to 11, wherein all carbon of the liquid carbon dioxide comprises carbon from the first, second and/or third feedstock(s) being gasified.

13. The method (200) according to any of the claims 10 to 12, further comprising the following steps of:
cooling of the gaseous elements (208) being formed during gasification,
optionally cleaning of the gaseous elements (209) into carbon monoxide and hydrogen,
allowing the carbon monoxide of the gaseous elements to react with water (210) according to the following formula: CO + H₂O => H₂ + CO₂,
separation of H₂ and CO₂ (211) into a first stream of hydrogen gas and a second stream of carbon dioxide gas, and
optionally collecting the H₂ and CO₂ (212) in sealed containers preferably the second stream of carbon dioxide gas is compressed and collected in liquid form.

14. The method (200) according to claim 13, wherein carbon dioxide gas being formed upon cooling of the first feedstock (202) by means of liquid carbon dioxide being fed directly into the process flow is provided upon the step of cooling the gaseous elements (208), wherein the carbon dioxide gas is allowed to react with methane of the gaseous elements and form hydrogen gas and carbon monoxide gas according to the following formula: CO₂ + CH₄ => 2CO + 2H₂.

15. The method (200) according to any of the claims 13 to 14,
wherein carbon dioxide gas being formed upon cooling of the first feedstock (202) by means of liquid carbon dioxide being fed directly into the process flow is provided upon the step of gasification, wherein the carbon dioxide gas is allowed to react with carbon from the first, second and/or third feedstock(s) upon the gasification in presence of a catalytic substance, said catalytic substance preferably being a metal, according to the formula: CO₂ + C => 2CO and wherein the carbon dioxide as is allowed to react with methane of the gaseous elements according to the formula CO₂ + CH₄ => 2CO + 2H₂.
